# EUROPÄISCHE PATENTSCHRIFT

(11) **EP 0 542 209 B1**
(45) Veröffentlichungstag und Bekanntmachung des Hinweises auf die Patenterteilung: **03.09.1997**
(21) Anmeldenummer: 92119234.0
(22) Anmeldetag: 11.11.1992
(51) Int. Cl.: C08K 5/00, C08L 67/06, C09D 167/06, C08F 8/32, C08G 63/46, B05D 7/26

(54) **Bindemittelzusammensetzung, diese enthaltende Überzugsmittel und deren Verwendung**
Binder composition, coatings containing it and their use
Composition de liant, revêtements le contenant et leur utilisation

(30) Priorität: 15.11.1991 DE 4137613
(43) Veröffentlichungstag der Anmeldung: 19.05.1993
(73) Patentinhaber: Herberts Gesellschaft mit beschränkter Haftung, 42285 Wuppertal (DE)
(72) Erfinder: Bederke, Klaus, Dr., W-4322 Sprockhövel (DE); Kerber, Hermann, W-5600 Wuppertal 21 (DE); Schubert, Walter, Dr., W-5600 Wuppertal 12 (DE); Brock, Thomas, Dr., W-5030 Hürth (DE); Löffler, Helmut, W-5040 Brühl (DE)
(74) Vertreter: Türk, Gille, Hrabal, Leifert

(56) Entgegenhaltungen:
- EP-A- 0 199 087
- EP-A- 0 420 133
- WO-A-88/07556

## Beschreibung

Die Erfindung betrifft ein Zwei-Komponenten-Bindemittel, das für Überzugsmittelzusammensetzungen geeignet ist.

In der DE-A-37 13 511 werden Zweikomponenten-Lackbindemittel auf der Basis von Methacrylsäure-2-acetoacetoxy-ethylestern sowie deren Umsetzungsprodukte mit Aldehyden oder Ketonen und Aminen beschrieben. Diese Systeme härten bei Raumtemperatur jedoch sehr langsam.

In der EP-A-0 160 824 werden Zweikomponenten-Lacke auf der Basis von Umsetzungsprodukten von Verbindungen mit CH-aciden Gruppen mit olefinisch ungesättigten Verbindungen beschrieben. Diese Systeme härten bei Raumtemperatur unzureichend und sind daher beispielsweise für Reparaturlackierungen auf dem Kraftfahrzeugsektor in Werkstätten, die keine Einbrennvorrichtungen haben, nicht geeignet.

Durch Erwärmen härtbare Zweikomponenten-Überzugsmittel auf der Basis CH-acider Verbindungen und von Verbindungen mit mindestens zwei α,β-ungesättigten Gruppen werden auch in der EP-A-0 224 158 beschrieben. Als CH-acide Verbindungen werden dort Methantricarbonsäureamid-Gruppenenthaltende Verbindungen eingesetzt. Auch diese Systeme härten bei Raumtemperatur unzureichend.

In der EP-A-0 203 296 wird ein isocyanatfreies Zweikomponenten-Bindemittelsystem beschrieben, das auf der Umsetzung von olefinisch ungesättigten Verbindungen mit geblockten Polyaminen beruht. Dieses System kann zwar bei Raumtemperatur gehärtet werden, jedoch werden Benzinbeständigkeit und Härte des Systems nur langsam erreicht. Eine Katalyse mit Lewis-Basen wird nicht erwähnt.

In der DE-A-39 32 517 wird die Vernetzung von Acryloyl-ungesättigten Bindemitteln mit Enamin-funktionalisierten Vernetzern beschrieben. Diese Systeme sind als Spachtel- bzw. Füllermaterialien nur unzureichend geeignet, da hier keine Aushärtung bei Raumtemperatur innerhalb weniger Minuten möglich ist.

WO-A-8 807 556 beschreibt eine härtbare Zusammensetzung auf Basis eines Michael-Additionsproduktes, die keine Polyamin-Härter enthält.

Aufgabe der Erfindung ist die Bereitstellung einer Bindemittelzusammensetzung, die zur Herstellung von Überzugsmitteln geeignet ist, die bei niedriger Temperatur, z. B. bei Raumtemperatur rasch zu Filmen mit guter Härte, Wasser- und Lösemittelbeständigkeit ausgehärtet werden können.

Es hat sich gezeigt, daß diese Aufgabe gelöst werden kann durch eine, einen Gegenstand der Erfindung darstellende Bindemittelzusammensetzung, enthaltend
A. 4 - 72 Gew.% einer CH-aciden Verbindung, erhalten durch Umesterung eines aliphatischen β-Ketocarbonsäureesters mit einem oder mehreren hydroxylgruppenhaltigen Monomeren und/oder Polymeren, die mindestens zwei Hydroxylgruppen im Molekül enthalten, mit einer OH-Zahl von mindestens 50 und einem Zahlenmittel des Molekulargewichts (Mn) von bis zu 10000,
B. 4 - 72 Gew.% einer α,β-ungesättigten Verbindung mit mindestens zwei Gruppen der allgemeinen Formel

   R₁R₂C=CR₃-CO-

   die über den Rest eines zwei- oder mehrwertigen Alkohols, eines Di- oder Polyamins oder Aminoalkohols an mindestens eine weitere Gruppe R₁R₂C=CR₃-CO- gebunden ist, worin R₁, R₂ und R₃ unabhängig voneinander ein Wasserstoffatom oder ein gerader oder verzweigter Alkylrest mit 1 bis 10 Kohlenstoffatomen, der eine oder mehrere olefinische Unsättigungen und/oder eine oder mehrere Hydroxylgruppen aufweisen kann, sind,
C. 10 - 80 Gew.% eines oder mehrerer Polyamine mit mindestens zwei primären und/oder sekundären Aminfunktionen, die verkappt sein können, im Molekül, als Härter, und
D. 0,01 - 5 Gew.%, bezogen auf die Summe der Gewichte der Komponenten A), 8) und C), eines Katalysators in Form einer Lewis- oder Brönstedt-Base, wobei die konjugierten Säuren der letzteren einen pKA-Wert von mindestens 10 haben.

Das erfindungsgemäße Bindemittel kann organische Lösemittel und/oder Wasser enthalten, als organische Lösemittel beispielsweise Restlösemittel von der Herstellung oder durch nachträglichen Zusatz zur Einstellung günstiger Gebrauchsviskositäten. Solche Lösemittel können beispielsweise die später zur Herstellung der Überzugsmittel genannten sein.

Vorzugsweise wird aber auf die Anwesenheit eines organischen Lösemittels oder gegebenenfalls Wasser verzichtet und der Einsatz eines weitgehend lösemittelfreien Bindemittels angestrebt, um den insbesondere bei der Verwendung des Bindemittels als Spachtelmasse sehr störenden Filmschrumpf zu vermeiden.

Die erfindungsgemäße CH-acide Komponente A kann hergestellt werden durch Umesterung eines aliphatischen β-Ketocarbonsäureesters mit einem Polyol.

Geeignete β-Ketocarbonsäureester sind beispielsweise Ester der Acetessigsäure bzw. alkylsubstituierter Acetessigsäuren, wie α- und/oder γ-Methylacetessigsäure. Geeignete Ester dieser Säuren sind solche mit aliphatischen Alkoholen, bevorzugt niederen Alkoholen mit 1 bis 4 Kohlenstoffatomen, wie Methanol, Ethanol oder Butanol.

Als Polyole zur Umsetzung mit den β-Ketocarbonsäureestern sind gemäß einer bevorzugten Ausführungsform der Erfindung Monomere und Polymere geeignet, die ausgewählt sind aus:
a) Polyolen aus der Gruppe von geraden oder verzweigten Alkan-di- und polyolen mit 2 bis 12 Kohlenstoffatomen,
b) hydroxylgruppenhaltigen Poly(meth)acrylaten oder Poly(meth)acrylamiden auf der Basis von (Meth)Acrylsäurehydroxyalkylestern oder (Meth)Acrylsäure-hydroxyalkylamiden mit jeweils 2 bis 12 Kohlenstoffatomen im Alkylteil, gegebenenfalls copolymerisiert mit α,β-ungesättigten Monomeren, mit einem Zahlenmittel des Molekulargewichts (Mn) von 1000 bis 10000,
c) hydroxylgruppenhaltigen Poly(meth)acrylaten auf der Basis von (Meth)Acrylsäurehydroxyalkylestern mit 2 bis 12 Kohlenstoffatomen im Alkylteil und gegebenenfalls copolymerisierbaren α,β-ungesättigten Monomeren, die mit cyclischen Estern von Hydroxycarbonsäuren mit 4 bis 6 Kohlenstoffatomen modifiziert sind, mit einem Zahlenmittel des Molekulargewichts (Mn) von 1000 bis 10000, und
d) Polyester-Polyolen oder Polyether-Polyolen jeweils mit einem Zahlenmittel des Molekulargewichts (Mn) von 500 bis 2000.

Geeignete Alkan-di- und -polyole der Gruppe a) sind solche mit geraden und verzweigten Ketten mit 2 - 12 Kohlenstoffatomen. Sie enthalten mindestens zwei Hydroxyfunktionen, vorzugsweise jedoch mindestens drei. Beispiele hierfür sind Propandiol, Butandiol, Hexandiol, Glycerin, Trimethylolpropan und Pentaerythrit.

Beispiele für hydroxylgruppenhaltige Poly(meth)acrylate b) auf der Basis von (Meth)Acrylsäurehydroxyalkylestern mit 2 bis 12 Kohlenstoffatomen im Alkylteil sind Hydroxylalkylester der Acrylsäure oder Methacrylsäure mit Alkoholen mit mindestens zwei Hydroxylgruppen, wie 1,4-Butandiol-mono(meth)acrylat, 1,6-Hexandiol-mono(meth)acrylat oder 1,2,3-Propantriolmono(meth)acrylat. Beispiele für hydroxylgruppenhaltige Poly(meth)acrylamide b) auf der Basis von (Meth)Acrylsäurehydroxyalkylamiden sind Amide der Acrylsäure oder Methacrylsäure mit Hydroxyalkylaminen oder Di(hydroxyalkyl)aminen mit jeweils 2 bis 12 Kohlenstoffatomen im Alkylteil, die eine oder mehrere Hydroxylgruppen aufweisen können, wie Acrylsäurehydroxyethylamid. Der in der vorliegenden Beschreibung und den Patentansprüchen verwendete Ausdruck (Meth)Acryl soll und/oder Methacryl bedeuten.

Die hydroxylgruppenhaltigen Poly(meth)acrylate der Komponente b) können Homo- oder Copolymerisate sein. Sie weisen ein Zahlenmittel des Molekulargewichts von 1000 bis 10000, bevorzugt von 3000 bis 6000 auf. Copolymerisierbare Monomere zur Herstellung der Copolymerisate sind α,β-ungesättigten Monomere, radikalisch polymerisierbare Monomere aus der Gruppe der Ester von α,β-ungesättigten Carbonsäuren, wie Acrylsäure oder Methacrylsäure, wobei Beispiele für die Alkoholkomponenten der Ester Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol, α-Methylstyrol und Vinyltoluol. Weitere Beispiele sind Vinylester kurzkettiger Carbonsäuren, wie Vinylacetat, Vinylpropionat und Vinylbutyrat.

Die hydroxylgruppenhaltigen Poly(meth)acrylate der vorstehend definierten Komponente c) können modifizierte Poly(Meth)acrylat-homo- und -copolymere sein, wie sie unter b) beschrieben werden, deren Hydroxylgruppen ganz oder partiell mit cyclischen Estern, wie z. B. von Hydroxycarbonsäuren mit 4 bis 6 Kohlenstoffatomen, wie Butyrolacton oder Caprolacton umgesetzt sind. Die erhaltenen modifizierten Poly(meth)acrylate der Komponente c) weisen ein Zahlenmittel des Molekulargewichts Mn von 1000 bis 10000 auf.

Beispiele für die Polyesterpolyole und Polyetherpolyole der Komponente d) sind solche mit einem Zahlenmittel des Molekulargewichts Mn von 500 bis 2000. Spezielle Beispiele sind Umsetzungsprodukte von Di- bzw. Tricarbonsäuren, wie Adipinsäure oder Trimellithsäure, mit Polyolen, wobei die Polyole im Überschuß vorliegen. Weitere Beispiele sind Umsetzungsprodukte von Di- oder Triolen, wie Propandiol, Butandiol oder Glycerin, mit Ethylenoxid oder Propylenoxid. Die Synthese der C-H-aciden Komponente kann beispielsweise über mehrere Stufen erfolgen. Das Polyol wird zunächst nach Entfernen von gegebenenfalls vorhandenem Lösemittel mit dem aliphatischen β-Ketocarbonsäureester umgeestert.

Bei der Umesterung des Polyoles kann beispielsweise so verfahren werden, daß das, gegebenenfalls von Lösemittel durch Anlegen eines Vakuums befreite Polyol vorgelegt wird. Der β-Ketocarbonsäureester wird nun im Überschuß zugegeben, beispielsweise zugetropft. Die Reaktion erfolgt bei erhöhter Temperatur; der freigesetzte Alkohol wird aus dem System entfernt.

Zur Beschleunigung der Reaktion ist auch die Zugabe eines Katalysators möglich. Beispiele für derartige Katalysatoren sind Säuren, wie Ameisensäure oder p-Toluolsulfonsäure. Es ist günstig bei der Umesterung die Reaktionstemperatur kontinuierlich zu erhöhen (beispielsweise in Schritten von 10°C/20 min), bis eine Temperatur erreicht ist, die knapp (etwa 10°C) unterhalb des Siedepunktes des β-Ketocarbonsäureesters liegt. Nach quantitativer Umesterung wird der überschüssige β-Ketocarbonsäureester entfernt, beispielsweise durch Anlegen eines Vakuums. Anschließend kann das Gemisch abgekühlt und mit einem inerten Lösemittel auf einen gewünschten Festkörpergehalt eingestellt werden.

Die erfindungsgemäßen Bindemittelzusammensetzungen können zur Viskositätseinstellung auch 2-Acetoacetoxy-ethylmethacrylat als Reaktivverdünner enthalten.

Als weitere Bindemittelkomponente B) wird in den erfindungsgemäßen Bindemittelzusammensetzungen eine Verbindung eingesetzt, die mindestens zwei ungesättigte funktionelle Gruppen der allgemeinen Formel (I) R₁R₂C=CR₃-CO- aufweist, worin R₁, R₂ und R₃ wie in den Ansprüchen definiert sind. Diese Gruppen können über kurz- oder langkettige Reste, Oligomere und/oder Polymere von zwei- oder mehrwertigen Alkoholen, Di- oder Polyaminen oder Aminoalkoholes miteinander verbunden sein, wobei diese Oligomere und Polymeren z. B. Zahlenmittel des Molekulargewichts Mn von 1000 bis 10000 aufweisen können. Als Oligomere und Polymere kommen beispielsweise gesättigte und/oder ungesättigte zwei oder mehrere Hydroxylgruppen enthaltende Polyether, Polyester oder Polyurethane in Frage, z. B. solche auf der Basis von Maleinsäure, Phthalsäure und Diolen, Hydroxylgruppen enthaltenden Acrylharzen, aliphatischen oder vorzugsweise aromatischen, gegebenenfalls Hydroxylgruppen enthaltenden Epoxidharzen, z. B. solchen auf der Basis von Diphenylolpropan und/oder -methan, Hydantoin und/oder Aminharzen. Dabei kann der Rest der allgemeinen Formel (I) esterartig gebunden sein, z. B. durch Anlagerung von Acryl- oder Methacrylsäure oder deren Derivaten an Epoxygruppen von Epoxidharz oder durch Veresterung an Hydroxylgruppen von Polyolen. Geeignete mehrwertige Alkohole sind beispielsweise Alkandiole und Triole mit 2 bis 8 Kohlenstoffatomen, wie Ethandiol, die verschiedenen Propan-, Butan-, Hexan- und Octandiole, oder deren Homologe, die entsprechenden oligomeren Ether, ferner Glycerin, Trimethylolethan oder Trimethylolpropan, Hexantriol, Pentaerythrit, Dipentaerythrit, Sorbit, sowie Polyvinylalkohol.

Die Gruppen der allgemeinen Formel (I) können auch über NH-Gruppen und/oder OH-Gruppen an Polyamine mit mindestens zwei NH-Gruppen oder mindestens einer NH-Gruppe und mindestens einer OH-Gruppe gebunden sein. Als NH-Gruppen enthaltende Ausgangsverbindungen für derartige Verbindungen können beispielsweise Di- und Polyamine genannt werden, wie Alkylendiamine und deren Oligomere, wie Ethylendiamin, Propylendiamin, Diethylentriamin, Tetramine und höhere Homologe dieser Amine, sowie Aminoalkohole wie Diethanolamin oder dergleichen. Als Amine kommen z. B. auch Aminocarbonsäureester mehrwertiger Alkohole in Frage. Als Verbindung mit NH-Gruppen kommen z. B. in Frage Acryl- oder Methacrylsäurepolyamide, ferner Polyurethane, z. B. Polyisocyanate, die in Form von Polyurethangruppen verkappt sind, wie solche, die durch Umsetzung von Hydroxyethylacrylat mit Polyisocyanaten erhalten werden, Aminharze wie Methoxymelamine, vorzugsweise Hexamethylolmelamin, Harnstoffharze, wobei der Rest der allgemeinen Formel (I) mit der Gruppierung -CO- an die Amingruppen dieser Verbindungen als Amid gebunden ist. Falls diese Aminverbindungen über OH-Gruppen bzw. Hydroxyalkylgruppen verfügen, ist es auch möglich, daß der Rest der Formel (I) esterartig oder aber über eine Ethergruppe an diese Verbindungen gebunden ist. Für die Etherbindung des Restes der Formel (I) kann man von einem Hydroxyalkylester oder einem Hydroxyalkylamid einer ungesättigten Säure wie Acrylsäure ausgehen.

Der Rest der allgemeinen Formel (I) in der Komponente B) kann von einer ein- oder mehrfach ungesättigten Monocarbonsäure, z. B. mit 2 bis 10, vorzugsweise 3 bis 6 Kohlenstoffatomen, wie Zimtsäure, Crotonsäure, Citraconsäure, Mesaconsäure, Dihydrolävulinsäure, Sorbinsäure, vorzugsweise Acrylsäure und/oder Methacrylsäure abgeleitet sein.

Ebenfalls möglich ist die Verwendung von Addukten aus Copolymeren der Verbindung α-Dimethyl-m-isopropenylbenzylisocyanat (im weiteren Text stets m-TMI genannt) mit Hydroxy(meth)acrylmonomeren. Die Comonomeren, die zur Herstellung der Copolymeren mit m-TMI verwendet werden können, sind z. B. übliche Ester der (Meth)acrylsäure, wie sie vorstehend zur Erläuterung der Polyole bereits genannt wurden. Beispiele für Hydroxy(meth)acrylmonomere zur Adduktbildung sind Hydroxyethyl(meth)acrylat, Hydroxypropyl(meth)acrylat oder Butandiolmonoacrylat. Ebenfalls möglich ist die Verwendung von Additionsprodukten von Hydroxyethylmethacrylat an Caprolacton.

Die Komponente B) kann frei von Lösemitteln sein oder aber Restlösemittel von ihrer Herstellung enthalten, z. B. aliphatische und/oder aromatische Kohlenwasserstoffe. Der Festkörpergehalt kann auf gewünschte Werte eingestellt werden, z. B. durch Entfernen des Restlösemittels, beispielsweise durch Destillation oder durch Zusatz von Wasser oder Lösemitteln, die für die anschließende Bereitung von Überzugsmitteln benötigt werden und später beschrieben werden. Bevorzugt wird das gleiche Lösemittel wie für die Komponente A) verwendet.

Die Komponente C) in der Bindemittelzusammensetzung ist eine Polyaminkomponente mit mindestens zwei funktionellen Gruppen der Formel

R⁴HN -,

worin R⁴ ein Wasserstoffatom oder ein gerade oder verzweigter Alkylrest mit 1 bis 10 Kohlenstoffatomen oder Cycloalkylrest mit 3 bis 8, bevorzugt 6 oder 6 Kohlenstoffatomen, sein kann, enthält.

Geeignete Polyamine sind Diamine und Amine mit mehr als zwei Aminogruppen, wobei die Aminogruppen primär und/oder sekundär sein können. Darüberhinaus sind als Polyamine beispielsweise auch Addukte geeignet, die aus Polyaminen mit mindestens zwei primären Aminogruppen und mindestens einer, bevorzugt einer, sekundären Aminogruppen bestehen, mit Epoxyverbindungen, Polyisocyanaten und Acryloylverbindungen. Darüberhinaus sind auch Aminoamide und Addukte aus carboxyfunktionalisierten Acrylaten mit Iminen geeignet, die mindestens zwei Aminogruppen aufweisen.

Beispiele für geeignete Di- und Polyamine sind beispielsweise in den EP-A-0 240 083 und EP-A-0 346 982 beschrieben. Beispiele hierfür sind aliphatische und/oder cycloaliphatische Amine mit 2 - 24 C-Atomen, die 2 - 10 primäre Aminogruppen, bevorzugt 2 - 4 primäre Aminogruppen, und 0 - 4 sekundäre Aminogruppen enthalten. Repräsentative Beispiele hierfür sind Ethylendiamin, Propylendiamin, Butylendiamin, Pentamethylendiamin, Hexamethylendiamin, 4,7-Dioxa-decan-1,10-diamin, 1,2-Diaminocyclohexan, 1,4-Diaminocyclohexan, Isophorondiamin, Diethylentriamin, Dipropylentriamin, 2,2-Bis-(4-aminocyclohexyl)propan; Polyether-Polyamine, z. B. solche mit dem Handelsnamen Jeffamine der Jefferson Chemical Company, Bis-(3-aminopropyl)ethylamine, 3-Amino-1-(methylamino)-propan und 3-Amino-1(cyclohexylamino)propan.

Beispiele für gebräuchliche Polyamine auf der Basis von Addukten von polyfunktionellen Aminkomponenten mit di- oder polyfunktionellen Epoxyverbindungen sind solche, die hergestellt werden unter Verwendung von beispielsweise di- oder polyfunktionellen Epoxyverbindungen, wie Diglycidyl- oder Polyglycidylether von (cyclo)aliphatischen oder aromatischen Hydroxyverbindungen wie Ethylenglykol, Glycerol, 1,2- und 1,4-Cyclohexandiol, Bisphenole wie Bisphenol A, Polyglycidylether von Phenolformaldehyd-Novolaken, Polymere ethylenisch ungesättigter Gruppen, die Epoxy-Gruppen enthalten, wie Glycidyl(meth)acrylat, N-Glycidyl(meth)acrylamid, und/oder Allylglycidylether, wahlweise copolymerisiert mit verschiedenen anderen ethylenisch ungesättigten Monomeren, Glycidylether von Fettsäuren mit 6 - 24 C-Atomen, epoxidierte Polyalkadiene, wie epoxidiertes Polybutadien, Hydantoin-Epoxy-Harze, Glycidylgruppen-haltige Harze, wie Polyester oder Polyurethane, die eine oder mehrere Glycidylgruppen pro Molekül enthalten, und Gemische der genannten Harze und Verbindungen.

Die Anlagerung der Polyamine an die genannten Epoxyverbindungen erfolgt unter Ringöffnung der Oxirangruppierung. Die Reaktion kann beispielsweise in einem Temperaturbereich von 20 - 100°C erfolgen, bevorzugt aber zwischen 20 - 60°C. Gegebenenfalls kann mit 0,1 - 2 Gew.% einer Lewis-Base wie Triethylamin oder einem Ammoniumsalz wie Tetrabutylammoniumjodid katalysiert werden.

Gebräuchliche Isocyanate für die Herstellung der Polyaminkomponente auf der Basis von Polyamin-Isocyanat-Addukten sind aliphatische, cycloaliphatische und/oder aromatische Di-, Tri- oder Tetraisocyanate, die ethylenisch ungesättigt sein können. Beispiele hierfür sind 1,2-Propylendiisocyanat, Trimethylendiisocyanat, Tetramethylendiisocyanat, 2,3-Butylendiisocyanat, Hexamethylendiisocyanat, 2,2,4-Trimethylhexamethylen-diisocyanat, 2,4,4-Trimethylhexamethylendiisocyanat, ω,ω'-Dipropyletherdiisocyanat, 1,3-Cyclopentandiisocyanat, 1,2- und 1,4-Cyclohexandiisocyanat, Isophorondiisocyanat, 4-Methyl-1,3-diisocyanatcyclohexan, Transvinylidendiisocyanat, Dicyclohexylmethan-4,4'-diisocyanat, 3,3'-Dimethyl-dicyclohexylmethan-4,4'-diisocyanat, Toluydendiisocyanat, 1,3-Bis(1-isocyanato-1-methylethyl)benzol, 1,4-Bis(1-isocyanato-1-methylethyl)-benzol, 4,4'-Diisocyanatodiphenyl, 3,3'-dichloro-4,4'-diisocyanatodiphenyl, Addukte aus 2 Molen eines Diisocyanates, z. B. Hexamethylendiisocyanat oder Isophorondiisocyanat an ein Mol eines Diols, z. B. Ethylenglykol, das Addukt aus 3 Molen Hexamethylendiisocyanat an 1 Mol Wasser (erhältlich unter dem Handelsnamen Desmodur N von der Bayer AG), das Addukt aus 1 Mol Trimethylolpropan und 3 Molen Toluidendiisocyanat (erhältlich unter dem Handelsnamen Desmodur L von der Bayer AG) und das Addukt aus 1 Mol Trimethylolpropan und 3 Molen Isophorondiisocyanat.

Die Anlagerung von Polyaminen an die genannten Isocyanatverbindungen erfolgt beispielsweise in einem Temperaturbereich von 20 - 80^{o}C, bevorzugt 20 - 60°C. Gegebenenfalls kann durch Zugabe von 0,1 bis 1 Gew.% eines tertiären Amins, wie Triethylamin und/oder 0,1 - 1 Gew.% einer Lewis-Säure, wie Dibutylzinnlaurat, katalysiert werden.

Beispiele für di- oder polyfunktionelle acryloylungesättigte Verbindungen zum Herstellen von Polyaminaddukten sind in der US-PS 4,303,563 beschrieben, z. B. Ethylenglykoldiacrylat, Diethylenglykoldiacrylat, Trimethylenglykoldiacrylat, 1,3-Butylenglykoldiacrylat, 1,6-Hexamethylenglykoldiacrylat, Trimethylolpropandiacrylat, Pentaerytrituoltetraacrylat und Pentaerytrituoltriacrylat. Weitere Beispiele für polyfunktionelle acryloyl-ungesättigte Acrylate sind:
1) Urethanacrylate, erhalten durch die Reaktion einer Isocyanatgruppe eines Polyisocyanates mit einem Hydroxyacrylat, z. B. Hexamethylendiisocyanat und Hydroxyethylacrylat, die Herstellung ist beschrieben in US-PS 3,297,745,
2) Polyetheracrylate, erhalten durch Umesterung eines hydroxyterminierten Polyethers mit Acrylsäure, beschrieben in US-PS 3,380,831,
3) Polyesteracrylat, erhalten durch Veresterung eines Hydroxylgruppenhaltigen Polyesters mit Acrylsäure, beschrieben in US-PS 3,935,173,
4) polyfunktionelle Acrylate, erhalten durch die Reaktion eines Hydroxylfunktionalisierten Acrylates, wie z. B. Hydroxyethylacrylat mit
   a) Dicarbonsäuren mit 4 - 15 C-Atomen,
   b) Polyepoxiden mit terminalen Glycidylgruppen,
   c) Polyisocyanaten mit terminalen Isocyanatgruppen, beschrieben in US-PS 3,560,237,
5) Acrylat-terminierte Polyester, erhalten durch die Reaktion von Acrylsäure, einem Polyol mit mindestens drei Hydroxyfunktionen und einer Dicarbonsäure, beschrieben in US-PS 3,567,494,
6) Polyacrylat, erhalten durch die Reaktion von Acrylsäure mit einem Epoxidfunktionen enthaltenden epoxidiertem Öl, wie Sojabohnenöl oder Leinsamenöl, beschrieben in US-PS 3,125,592,
7) Polyacrylat, erhalten durch die Reaktion von Acrylsäure mit Epoxidgruppen eines Diglycidylethers von Bisphenol A, beschrieben in US-PS 3,373,075,
8) Polyacrylat, erhalten durch die Reaktion von Acrylsäure an ein Epoxidfunktionalisiertes Vinylpolymer, z. B. Polymere mit Glycidylacrylat oder Vinylglycidylether, beschrieben in US-PS 3,530,100,
9) Polyacrylat, erhalten durch die Reaktion von Acrylsäureanhydrid mit Polyepoxiden, beschrieben in US-PS 3,676,398,
10)Acrylat-Urethanester, erhalten durch die Reaktion eines Hydroxyalkylacrylates, mit einem Diisocyanat und einem Hydroxylfunktionalisierten Alkydharz, beschrieben in US-PS 3,676,140,
11)Acrylat-Urethanpolyester, erhalten durch die Reaktion eines Polycaprolactondiols- oder -triols mit einem organischen Polyisocyanat und mit einem Hydroxyalkylacrylat, beschrieben in US-PS 3,700,634,
12)Urethan-Polyacrylat, erhalten durch die Reaktion eines Hydroxyfunktionalisierten Polyesters mit Acrylsäure und einem Polyisocyanat, beschrieben in US-PS 3,759,809.

Die Acryloyl-Endgruppen der Di- bzw. Polyacrylmonomeren bzw. der Polyacrylate aus den Beispielen 1) bis 12) können mit Polyaminen funktionalisiert werden. Die Anlagerung kann z. B. in einem Temperaturbereich von 20 - 100°C, bevorzugt bei 40 - 60^{o}C, erfolgen.

Eine weitere Methode zur Synthese eines Amin-funktionalisierten Härters ist in der EP-A-2801 beschrieben. Hier werden Acrylsäureestercopolymere mit Diaminen unter Alkoholabspaltung amidisiert. Die dabei erhaltene reaktive Gruppe besitzt folgende Struktur: 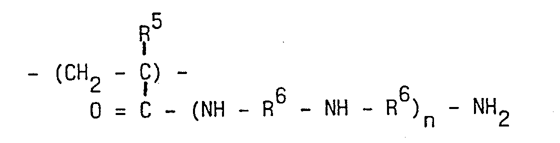
- R⁵ =: H oder CH₃
- R⁶ =: Alkylengruppen mit 2 oder 3 C-Atomen, die gleich oder verschieden sein können
- n =: 0, 1, 2 oder 3
wobei der Rest 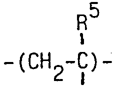 aus dem Acrylsäureestercopolymergerüst stammt.

Das Acrylsäureestercopolymere besitzt ein Zahlenmittel des Molgewichts Mn von 1000 - 20000, bevorzugt 2000 - 5000. Beispiele für mögliche Comonomere sind Ester der (Meth)acrylsäure wie z. B. Methyl-, Ethyl-, Butyl-, Cyclohexyl(meth)acrylat, Hydroxyethyl(meth)acrylat, Hydroxypropyl(meth)acrylat, weiterhin (Meth)acrylsäure, Styrol und Vinyltoluol.

Besonders bevorzugt ist Methylacrylat, da dieses Monomer der Aminolyse besonders leicht zugänglich ist. Der Anteil an Methacrylat am Copolymeren beträgt 2 - 35 Gew.%. Die Herstellung der Copolymere erfolgt durch Lösungspolymerisation in üblichen Lösungsmitteln wie Toluol, Xylole, Acetate, z. B. Butylacetat oder Ethylglykolacetat, Ethern wie Tetrahydrofuran oder Aromatengemische wie das Handelsprodukt Solvesso 100. Die Synthese der Copolymere ist dem Fachmann bekannt und bedarf keiner weiteren Erläuterung. Die Polyamine, die bei der Aminolyse eingesetzt werden, müssen mindestens zwei primäre oder sekundäre Amingruppen enthalten und wurden bereits zuvor beschrieben.

Ebenfalls als Härter verwendbar sind Reaktionsprodukte aus der Umsetzung eines (Meth)acrylsäurecopolymeren mit Alkyleniminen, wie sie in der EP-A-0 179 954 beschrieben wurden. Die erhaltenen funktionellen Gruppen besitzen die Struktur: 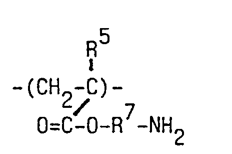
- R⁵ =: H oder CH₃
- R⁷ =: Alkylengruppe mit 2 bis 4 C-Atomen,
wobei der Rest 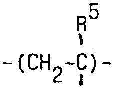 wie vorstehend definiert ist.

Neben (Meth)acrylsäure kann das Copolymere Ester der (Meth)acrylsäure oder Vinylverbindungen wie Styrol enthalten. Die beispielsweise verwendbaren Comonomeren wurden bereits bei der Definition der hydroxylgruppenhaltigen Poly(meth)acrylate b) beschrieben. Beispiele für Alkylenimine sind z. B. Propylen- oder Butylenimin.

Beispiele für ebenfalls erfindungsgemäß als Härter verwendbare Polyamine sind auch solche, die hergestellt werden durch Umsetzung von Copolymeren von α-Dimethyl-m-isopropenylbenzylisocyanat, die ein Zahlenmittel des Molgewichts (Mn) von 1000 bis 10000 aufweisen, mit Mono- oder Diketiminen, die entweder eine OH- oder sec.NH-Gruppierung enthalten.

Als Comonomere zur Herstellung der TMI-Copolymeren können alle üblichen vinylisch polymerisierbaren Monomeren ohne OH-Funktionalität verwendet werden, wie beispielsweise Ester der (Meth)acrylsäure wie z. B. Methyl-, Ethyl-, Butyl-, Isobutyl-, Ethylhexyl-, Cyclohexyl- und/oder Lauryl(meth)acrylat gewählt werden, weiterhin Styrol, Vinyltoluol und/oder -Methylstyrol. Die Herstellung der Copolymere erfolgt über übliche radikalische Lösungspolymerisation, wie sie dem Fachmann bekannt ist. Gearbeitet wird beispielsweise in aprotischen organischen Lösemitteln, z. B. Toluol und Xylol, und Estern, z. B. Butylacetat.

Verwendet hierzu werden im allgemeinen übliche Radikalinitiatoren, wie Peroxide und Azoverbindungen. Die Reaktion erfolgt z. B. unter Erwärmen, beispielsweise auf Temperaturen von 80 bis 140^{o}C.

Das monomere TMI kann in einem Bereich von 3 bis 40 Gew.%, bezogen auf das Gewicht sämtlicher Monomeren copolymerisiert werden, bevorzugt aber in einem Bereich von 5 bis 25 Gew.%.

Das Isocyanat-terminierte Copolymer wird anschließend mit einem oder mehreren mit OH- oder sec.NH-funktionalisierten Mono- und/oder Diketiniminen und/oder Mono- und/oder Dialdiminen umgesetzt.

Die Herstellung der Ketimine und/oder Aldimine (im Folgenden wird zur Vereinfachung der Ausdruck "Ketimine" gewählt, der jedoch auch Aldimine einschließen soll) erfolgt z. B. durch Umsetzung von Alkanolaminen oder Di- bzw. Triaminen, die mindestens eine primäre Aminogruppe, im Falle der Di- bzw. Triamine zusätzlich eine sekundäre Aminfunktion tragen, mit Aldehyden und/oder Ketonen unter Wasserabspaltung.

Beispiele für Alkanolamine sind:

Monoethanolamin, Monopropanolamin, Monohexanolamin oder 2-Amino-2-hydroxypropan.

Beispiele für Di- bzw. Triamine, die mindestens eine primäre Aminogruppe und eine sekundäre Aminogruppe tragen, sind:

N-Methylpropylamin, Diethylentriamin, Dipropylentriamin oder Bishexamethyltriamin.

Zur Herstellung der TMI-Acrylat/Ketimin-Addukte müssen die primären Aminogruppen der oben genannten Amine blockiert werden.

Hierbei werden die primären Amine mit Aldehyden oder Ketonen unter Wasserabspaltung zu Schiffschen Basen bzw. Aldiminen oder Ketiminen umgesetzt. Beispiele für solche Aldehyde und Ketone sind:

C₃-C₁₀-Verbindungen, wie Hexylaldehyd, Octylaldehyd, Diisopropylketon und/oder Methylisobutylketon. Die beiden letzten Verbindungen sind besonders bevorzugt, weil sie nur eine geringe Tendenz zu Nebenreaktionen zeigen.

Die OH- oder sec.NH-funktionalisierten Mono- oder Diketimine werden bei der Anlagerung an das Isocyanat-terminierte Copolymere bevorzugt im Unterschuß eingesetzt, bevorzugt werden 90 - 95 % der Isocyanatgruppen mit OH- oder NH-Gruppen umgesetzt. Die verbleibenden überschüssigen Isocyanatgruppen werden in einem letzten Reaktionsschritt mit Monoalkoholen wie z. B. Ethanol, Propanol oder Butanol urethanisiert.

Zur Synthese der Ketimin- bzw. Aldimin-funktionalisierten (verkappten) Polyamine wird beispielsweise zuerst ein TMI-Copolymerisat durch eine radikalische Lösungspolymerisation hergestellt. Anschließend wird ein Alkanolamin oder Di- bzw. Triketimin, das sowohl mindestens eine primäre als auch eine sekundäre Aminfunktion trägt, mit dem gewünschten Blockierungsmittel Aldehyd oder Keton in einem organischen Lösemittel, das mit Wasser ein azeotropes Gemisch bildet, vorgelegt. Durch Erhitzen dieses Gemisches wird das entstehende Reaktionswasser azeotrop abdestilliert.

Es ist günstig, die Herstellung unter Inertgas durchzuführen. Das Blockierungsmittel kann im Überschuß eingesetzt werden, das im Anschluß an die Reaktion abdestilliert werden kann. Es ist zweckmäßig, als Verkappungsmittel ein Keton/Aldehyd zu wählen, das selbst mit Wasser ein Azeotrop bildet, so daß auf ein zusätzliches organisches Lösemittel verzichtet werden kann. Zur Addition des OH- bzw. sec.NH-funktionalisierten Ketimins bzw. Aldimins an das Isocyanat-terminierte Copolymerisat wird das Ketimin bei z. B. 80°C unter Inertgas vorgelegt und das Copolymerisat in z. B. zwei Stunden zudosiert. Mit Hilfe einer Lewis-Säure, wie z. B. Dibutylzinnlaurat kann die Reaktion gegebenenfalls katalysiert werden. Nach Beendigung der Zudosierung wird, sofern das Ketimin im Unterschuß vorliegt, ein Alkohol, z. B. Butanol zugefügt. Es wird gegebenenfalls noch bei erhöhter Temperatur z. B. etwa 10 bis 30 min gerührt.

Die vorstehende Herstellungsweise stellt lediglich ein Beispiel für eine Verfahrensweise dar. Es kann beispielsweise auch so gearbeitet werden, daß das Copolymerisat vorgelegt wird und das Ketimin zugesetzt wird.

Die terminierten (freien) Aminogruppen der Polyamin-Härterkomponente C können verkappt sein, z. 8. mit Ketonen oder Aldehyden unter Ausbildung Schiffscher Basen.

Alle bisher beschriebenen Polyamine besitzen gegenüber den erfindungsgemäßen Bindemittelkomponenten eine sehr hohe Reaktivität, was sich in einer sehr geringen Topfzeit äußert. Aus diesem Grunde kann es zweckmäßig sein, die terminierten Amingruppen der genannten Polyamine mit Aldehyden oder Ketonen unter Wasserabspaltung zu Schiffschen Basen bzw. Aldiminen oder Ketiminen umzusetzen. Beispiele für zur Verkappung verwendbare Aldehyde und Ketone sind C₃-C₁₀-Verbindungen, wie Hexylaldehyd, Octylaldehyd, Diisopropylketon und/oder Methylisobutylketon. Die beiden letzten Verbindungen sind besonders bevorzugt, weil sie nur eine geringe Tendenz zu Nebenreaktionen zeigen.

Die Komponente C enthält eingemischt als Komponente D Katalysatoren in Form von Lewis-Basen oder Brönstedt-Basen,wobei die konjugierten Säuren der letzteren einen pKA-Wert von mindestens 10 haben. Die Komponente D kann aus einem oder mehreren Katalysatoren bestehen. Als besonders geeignet erwiesen sich Lewis-Basen, wie z. B. solche der Gruppe von cycloaliphatischen Aminen, wie Diazabicyclooctan (DABCO), tert.-aliphatischen Aminen, wie Triethylamin, Tripropylamin, N-Methyldiethanolamin, N-Methyldiisopropylamin oder N-Butyldiethanolamin, sowie Amidinen wie Diazabicycloundecen (DBU), und Guanidinen, wie z. B. N,N,N',N'-Tetramethylguanidin. Weitere Beispiele sind alkyl- oder arylsubstituierte Phosphane, wie z. B. Tributylphosphan, Triphenylphosphan, Tris-p-tolylphosphan, Methyl-diphenylphosphan, sowie hydroxy- und aminfunktionalisierte Phosphane, wie z. B. Trishydroxymethylphosphan und Tris-dimethylaminoethylphosphan.

Beispiele für die einsetzbaren Brönstedt-Basen sind Alkoholate, wie Natrium- oder Kaliumethylat, quartäre Ammoniumverbindungen, wie Alkyl-, Aryl- oder Benzylammoniumhydroxide oder -halogenide, wie z. B. Tetraethyl- oder Tetrabutylammoniumhydroxid oder -fluorid, sowie Trialkyl- oder Triaryl-phosphoniumsalze oder -hydroxide.

Die Menge der Katalysatoren beträgt im allgemeinen 0,01 bis 5 Gew.%, vorzugsweise 0,02 bis 2 Gew.%, bezogen auf den Gesamtfeststoffgehalt der Komponenten A, B und C.

Bei den erfindungsgemäßen Bindemittelzusammensetzungen handelt es sich um sogenannte Zweikomponenten-Systeme.

Die Komponenten A und B werden gemeinsam als Bindemittelkomponente 1 und die Komponenten C und D gemeinsam als Härterkomponente 2 gelagert.

Dies bedeutet, daß die Komponenten 1 und 2 getrennt gelagert werden und erst vor der Anwendung bzw. zur Anwendung beispielsweise zur Herstellung von Überzugsmitteln vermischt werden. Die erfindungsgemäßen Bindemittelzusammensetzungen können in üblicher Weise zu Überzugsmitteln, beispielsweise Füllern formuliert werden. Dies erfolgt im allgemeinen durch Zusatz von Lösemitteln oder Wasser. Dabei ist es möglich, eine Mischung der Komponenten 1 und 2 zu bereiten und diese in üblicher Weise durch den Zusatz von Lösemitteln oder Wasser und üblichen Additiven zu Überzugsmitteln aufzuarbeiten. Es besteht jedoch auch die Möglichkeit zunächst eine der Komponenten 1 oder 2 durch Zusatz von Lösemitteln oder Wasser und üblichen Additiven aufzubereiten und dann die andere Komponente zuzusetzen.

Geeignete organische Lösemittel für die Herstellung von Überzugsmitteln, beispielsweise Lacken, sind solche, wie sie auch bei der Herstellung der Einzelkomponenten A, B und C verwendet werden können. Beispiele für derartige Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether und Alkohole. Es sind dies lackübliche Lösemittel. Zur Herstellung der Überzugsmittel aus den erfindungsgemäßen Bindemitteln können auch wäßrige Lösungen bereitet werden. Hierzu können gegebenenfalls geeignete Emulgatoren verwendet werden, wie sie auf dem Lacksektor üblich sind.

Zur Herstellung der Überzugsmittel können übliche Additive zugesetzt werden, wie sie beispielsweise auf dem Lacksektor üblich sind. Beispiele für solche Additive sind Pigmente, beispielsweise transparente oder deckende farbgebende Pigmente wie Titandioxid oder Ruß und Effektpigmente, wie Metallschuppenpigmente und/oder Perlglanzpigmente.

Die erfindungsgemäßen Bindemittelzusammensetzungen eignen sich besonders günstig für Überzugsmittel, die derartige Effektpigmente enthalten. Bevorzugt enthalten sie Effektpigmente zusammen mit transparenten farbgebenden Pigmenten oder deckende farbgebende Pigmente zusammen mit Füllstoffen.

Weitere Beispiele für Additive sind Füllstoffe, wie z. B. Talkum und Silikate; Weichmacher, Lichtschutzmittel, Stabilisatoren und Verlaufsmittel, wie Silikonöle.

Die aus den erfindungsgemäßen Bindemitteln hergestellten Überzugsmittel können auf die gewünschte Applikationsviskosität durch entsprechende Regelung des Zusatzes von Lösemitteln und/oder Additiven eingestellt werden.

Die Überzugsmittel können je nach Mengenverhältnis der Komponenten 1 zur Komponente 2, Äquivalentgewicht und Katalysatormenge beispielsweise auf Topfzeiten zwischen wenigen Sekunden und 1 Stunde eingestellt werden.

Die Applikation der so hergestellten Überzugsmittel kann in üblicher Weise erfolgen, beispielsweise durch Tauchen, Spritzen, Streichen oder auf elektrostatischem Wege.

Die Aushärtung von aus den Überzugsmitteln erstellten Überzügen kann in einem weiten Temperaturbereich von beispielsweise -10°C bis 200^{o}C erfolgen. Bevorzugt ist der Temperaturbereich von 20°C bis 80°C, beispielsweise Raumtemperatur.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall. Die Überzugsmittel können auch im Mehrschichtverfahren eingesetzt werden. So können sie beispielsweise auf übliche Grundierungen, Basislacke, Füller oder auf bereits vorhandene Decklacke aufgetragen werden.

Ein besonders bevorzugtes Anwendungsgebiet für die erfindungsgemäßen Bindemittel stellt die Bereitstellung von Überzugsmitteln für Lackierungen auf dem Gebiet des Kraftfahrzeugsektors dar. Durch ie günstigen Härtungsbedingungen der aus den erfindungsgemäßen Bindemitteln hergestellten Überzugsmittel sind diese besonders auch für Kraftfahrzeug-Reparaturlackierungen geeignet.

Die vorliegende Erfindung betrifft somit auch Verfahren zur Herstellung von Überzügen auf verschiedenen Substraten, bei denen auf das Substrat ein aus den erfindungsgemäßen Bindemitteln hergestelltes Überzugsmittel appliziert wird, worauf getrocknet und gehärtet wird. Die Erfindung betrifft auch die Verwendung der erfindungsgemäßen Bindemittelzusammensetzungen in Spachteln, Füllern oder Decklacken.

In jedem Falle erhält man mit den aus den erfindungsgemäßen Bindemitteln hergestellten Überzugsmitteln Filme mit guter Härte und guter Wasser- und Lösemittelbeständigkeit, insbesondere Benzinbeständigkeit. Die Aushärtung erfolgt sehr rasch; so ist beispielsweise eine Durchhärtung schon innerhalb weniger Minuten, wie etwa 5 Minuten, bei Raumtemperatur erzielbar.

Die folgenden Beispiele dienen zur Erläuterung der Erfindung. Alle Teile (T) und Prozentangaben (%) beziehen sich auf das Gewicht.

### Beispiele

1) Herstellung eines acetessigesterfunktionalisierten Polyesters (Komponente A)
a) Herstellung des Polyesters 1a
   In einem 2-Liter-Dreihalskolben, der mit Rührer, Abscheider, Thermometer und Rückflußkühler versehen ist, werden 336,7 T Trimethylolpropan, 366,8 T Adipinsäure und 297 T Hexandiol mit 5 T unterphosphoriger Säure versetzt. Das Gemisch wird von 180°C in der Schmelze langsam weiter auf 230°C erhitzt, wobei Wasser abgeschieden wird. Die Reaktion wird fortgesetzt, bis eine Säurezahl von 20 mg KOH/g erreicht ist. Anschließend wird unter Wasserstrahlvakuum bis zu einer Säurezahl < 1,5 mg/KOH/g kondensiert. Der resultierende Polyester hat dann eine OH-Zahl von 466 mg KOH/g und eine Viskosität von 3200 mPa.s.
b) Herstellung des Polyesters 1b
   In einem 4-Liter-Dreihalskolben, der mit Rührer, Abscheider, Thermometer und Rückflußkühler versehen ist, werden 586,8 T Trimethylolpropan, 227,7 T Neopentylglykol, 499,3 T Bisphenol-A und 363,5 T Isophthalsäure mit 3 T unterphosphoriger Säure versetzt. Das Gemisch wird langsam auf 220°C erhitzt und in der Schmelze unter Wasserabscheidung bis zum Klarpunkt bei dieser Temperatur gehalten. Anschließend werden 319,7 T Adipinsäure bei 100°C zugegeben und das Gemisch wieder langsam auf 240°C erhitzt. Die Reaktion wird fortgesetzt, bis eine Säurezahl von ca. 1,8 mg KOH/g erreicht ist. Das erhaltene Harz ist im kalten Zustand fest und hat dann eine OH-Zahl von 401 mg KOH/g.
c) Herstellung eines acetessigesterfunktionalisierten Polyesters auf der Basis des Polyesters 1a
   In einem 4-Liter-Dreihalskolben, der mit Rührer, Tropftrichter, Abscheider und Rückflußkühler versehen ist, werden 1000 T des unter 1a) hergestellten Polyesters vorgelegt. Zu diesem Harz werden 850 T Acetessigester und 1,5 T 98%ige Ameisensäure gegeben und auf 130°C erhitzt, wobei Ethanol abgeschieden wird. Das Harz wird weiter auf 165^{o}C erhitzt, bis insgesamt 400 T Destillat abgeschieden sind. Im Anschluß daran werden im Vakuum alle flüchtigen Bestandteile abgezogen. Das erhaltene 98,1%ige Harz hat dann eine Viskosität von 3100 mPa.s und eine Farbzahl von 65 Hazen.
d) Herstellung eines acetessigesterfunktionalisierten Polyesters auf der Basis des Polyesters 1b
   In einem 4-Liter-Dreihalskolben, der mit Rührer, Tropftrichter, Abscheider und Rückflußkühler versehen ist, werden 1650 T des Polyesters 1b, 1232 T Acetessigester und 2,5 T 98%ige Ameisensäure vorgelegt und auf 132°C erhitzt, wobei Ethanol abgeschieden wird. Das Harz wird weiter auf 175°C erhitzt, bis insgesamt 304 T Destillat abgeschieden sind.
   Im Anschluß daran werden im Vakuum alle flüchtigen Bestandteile abgezogen. Das erhaltene 97,6%ige Harz hat dann eine Viskosität von 4150 mPa.s.

2) Polyacrylat:
Trimethylolpropantriacrylat (Komponente B)
3) Polyaminkomponente (Komponente C)
Handelsübliches cycloaliphatisches Amin, Aminzahl 235 bis 295 mg KOH/g, Viskosität 250 bis 500 mPa.s. (Addukt aus Bisphenol A und Isophorondiamin).
4) Katalysator:
Diazabicyclo (4.5.0)-undecen (Komponente D)
5) Herstellung von Spachtelmassen:
a) Herstellung einer Spachtelmasse auf der Basis des acetessigesterfunktionalisierten Polyesters 1c
I. Folgende Komponenten (A + B) werden miteinander vermischt: 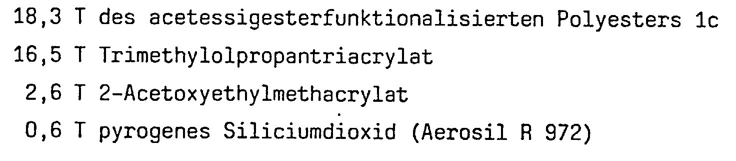 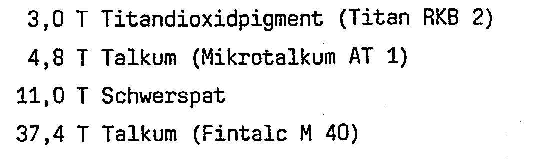
II. Als Härterkomponente (C + D) werden vermischt:

| | |
|---|---|
| 4,6 T | eines handelsüblichen Adduktes aus Bisphenol A mit Isophorondiamin |
| 0,6 T | Diazabicycloundecen (DBU) |

Die beiden vermischten Komponenten I. und II. werden anschließend innig miteinander vermengt.
Das Gemisch war nach 90 sec geliert und nach 150 sec fest.
b) Herstellung einer Spachtelmasse auf der Basis des acetessigesterfunktionalisierten Polyesters 1d

Es wird wie bei 5a) verfahren, wobei statt 18,3 T des Polyesters 1c durch die gleiche Menge Polyester 1d ersetzt werden.

Nach dem Mischen war die Masse nach 120 sec geliert und nach 240 sec fest.

### Anwendung

Beide Spachtelmassen 5a) und 5b) sind nach Auftrag auf Glasplatten bei einer Schichtdicke von ca. 100 µm innerhalb von 10 min fest und nach Aushärtezeit schleifbar.

## Patentansprüche

1. Bindemittelzusammensetzung, enthaltend
A. 4 - 72 Gew.% einer CH-aciden Verbindung, erhältlich durch Umesterung eines aliphatischen β-Ketocarbonsäureesters mit einem oder mehreren hydroxylgruppenhaltigen Monomeren und/oder Polymeren, die mindestens zwei Hydroxylgruppen im Molekül enthalten, mit einer OH-Zahl von mindestens 50 und einem Zahlenmittel des Molekulargewichts (Mn) von bis zu 10000,
B. 4 - 72 Gew.% einer α,β-ungesättigten Verbindung mit mindestens zwei Gruppen der allgemeinen Formel
R₁R₂C=CR₃-CO-
die über den Rest eines zwei- oder mehrwertigen Alkohols, eines Di- oder Polyamins oder Aminoalkohols an mindestens eine weitere Gruppe R₁R₂C=CR₃-CO- gebunden ist, worin R₁, R₂ und R₃ unabhängig voneinander ein Wasserstoffatom oder ein gerader oder verzweigter Alkylrest mit 1 bis 10 Kohlenstoffatomen, der eine oder mehrere olefinische Unsättigungen und/oder eine oder mehrere Hydroxylgruppen aufweisen kann, sind,
C. 10 - 80 Gew.% eines oder mehrerer Polyamine mit mindestens zwei Aminfunktionen, die primär und/oder sekundär und die verkappt sein können, im Molekül, als Härter, und
D. 0,01 - 5 Gew.%, bezogen auf die Summe der Gewichte der Komponenten A), B) und C), eines Katalysators in Form einer Lewis- oder Brönstedt-Base, wobei die konjugierten Säuren der letzteren einen pKA-Wert von mindestens 10 haben.

2. Bindemittelzusammensetzung nach Anspruch 1, **dadurch gekennzeichnet,** daß das hydroxylgruppenhaltige Monomere und das hydroxylgruppenhaltige Polymere der Komponente A) ausgewählt sind aus
a) Polyolen aus der Gruppe von geraden oder verzweigten Alkan-di- und polyolen mit 2 bis 12 Kohlenstoffatomen,
b) hydroxylgruppenhaltigen Poly(meth)acrylaten oder Poly(meth)acrylamiden auf der Basis von (Meth)Acrylsäurehydroxyalkylestern oder (Meth)Acrylsäure-hydroxyalkylamiden mit jeweils 2 bis 12 Kohlenstoffatomen im Alkylteil, gegebenenfalls copolymerisiert mit α,β-ungesättigten Monomeren, mit einem Zahlenmittel des Molekulargewichts (Mn) von 1000 bis 10000,
c) hydroxylgruppenhaltigen Poly(meth)acrylaten auf der Basis von (Meth)Acrylsäurehydroxyalkylestern mit 2 bis 12 Kohlenstoffatomen im Alkylteil und gegebenenfalls copolymerisierbaren α,β-ungesättigten Monomeren, die mit cyclischen Estern von Hydroxycarbonsäuren mit 4 bis 6 Kohlenstoffatomen modifiziert sind, mit einem Zahlenmittel des Molekulargewichts (Mn) von 1000 bis 10000, und
d) Polyester-Polyolen oder Polyether-Polyolen jeweils mit einem Zahlenmittel des Molekulargewichts (Mn) von 500 bis 2000.

3. Bindemittelzusammensetzung nach einem der Ansprüche 1 oder 2, dadurch gekennzeichnet, daß sie in lösemittelfreier Form vorliegt.

4. Bindemittelzusammensetzung nach einem der Ansprüche 1 oder 2, dadurch gekennzeichnet, daß sie in lösemittelhaltiger Form vorliegt.

5. Überzugsmittel, enthaltend die Bindemittelzusammensetzung nach einem der Ansprüche 1 bis 4 und darüberhinaus ein oder mehrere organische Lösemittel und/oder Wasser, sowie Pigmente und/oder Füllstoffe und gegebenenfalls lackübliche Zusatzstoffe.

6. Verfahren zur Mehrschichtlackierung durch Aufbringen einer Füllerschicht auf ein zu lackierendes gegebenenfalls grundiertes Substrat, Auftrag einer Basislackschicht und gegebenenfalls einer Klarlackschicht, wobei die Schichten einzeln und/oder gemeinsam eingebrannt werden, dadurch gekennzeichnet, daß man zur Herstellung der Füllerschicht ein Überzugsmittel gemäß Anspruch 5 verwendet.

7. Verwendung der Bindemittelzusammensetzung gemäß einem der Ansprüche 1 bis 4 zur Herstellung von Spachtelmassen oder Füllern.

8. Verwendung der Bindemittelzusammensetzung gemäß einem der Ansprüche 1 bis 4 zur Herstellung von bei Temperaturen von 20 bis 80°C härtbaren Überzugsmitteln.

9. Verwendung der Überzugsmittel nach Anspruch 5 zur Herstellung von Mehrschichtlackierungen.

10. Verwendung der Überzugsmittel nach Anspruch 5 zur Herstellung von Kraftfahrzeug-Serien- und -Reparaturlackierungen.

## Claims

1. A binder vehicle composition, containing
A. 4 - 72 % by weight of an acidic CH compound, obtainable by the transesterification of an aliphatic β-ketocarboxylic acid esters with one or more monomers and/or polymers which contain hydroxyl groups, which contain at least two hydroxyl groups in their molecule, which have an OH number of at least 50 and which have a number average molecular weight (Mn) up to 10,000,
B. 4 - 72 % by weight of an α,β-unsaturated compound containing at least two groups of general formula
R₁R₂C =CR₃-CO-
which is bonded via the radical of a di- or polyhydric alcohol, a di- or polyamine or an amino alcohol to at least one further R₁R₂C =CR₃-CO- group, where R₁, R₂ and R₃, independently of each other, are a hydrogen atom or a straight chain or branched alkyl radical containing 1 to 10 carbon atoms which may comprise one or more olefinic unsaturations and/or one or more hydroxyl groups,
C. 10- 80 % by weight of one or more polyamines comprising at least two amine functions, which may be primary and/or secondary and may be capped, as a hardener in the molecule, and
D. 0.01 - 5 % by weight, with respect to the sum of the weights of components A), B) and C, of a catalyst in the form of a Lewis or Brønsted base, wherein the conjugated acids of the latter have a pKA value of at least 10.

2. A binder vehicle composition according to claim 1, characterised in that the monomer which contains hydroxyl groups and the polymer which contains hydroxyl groups of component A) are selected from
a) polyols from the group comprising straight chain or branched alkane-di- and polyols containing 2 to 12 carbon atoms,
b) poly(meth)acrylates or poly(meth)acrylamides which contain hydroxyl groups and which are based on (meth)acrylic acid hydroxyalkyl esters or (meth)acrylic acid hydroxyalkylamides which each comprise 2 to 12 carbon atoms in their alkyl part, optionally copolymerised with a,β-unsaturated monomers, with a number average molecular weight (Mn) of 1000 to 10,000,
c) poly(meth)acrylates which contain hydroxyl groups and which are based on (meth)acrylic acid hydroxyalkyl esters containing 2 to 12 carbon atoms in their alkyl part, and optionally copolymerisable α,β-unsaturated monomers which are modified with cyclic esters of hydroxycarboxylic acids containing 4 to 6 carbon atoms, with a number average molecular weight (Mn) of 1000 to 10,000, and
d) polyester polyols or polyether polyols, each with a number average molecular weight (Mn) of 500 to 2000.

3. A binder vehicle composition according to either one of claims 1 or 2, characterised in that is exists in solvent-free form.

4. A binder vehicle composition according to either one of claims 1 or 2, characterised in that it exists in solvent-containing form.

5. Coating media containing the binder vehicle composition according to any one of claims 1 to 4 and additionally containing one or more organic solvents and/or water, as well as pigments and/or extenders and optionally customary lacquer additives.

6. A method of multi-layer coating by applying a primer surfacer coat to a substrate which is to be coated and which is optionally primed, applying a base lacquer coat and optionally a clear lacquer coat, wherein the coats are stoved individually and/or jointly, characterised in that a coating medium according to claim 5 is used for the production of the primer surfacer coat.

7. The use of the binder vehicle composition according to any one of claims 1 to 4 for the production of stopper compositions or primer surfacers.

8. The use of the binder vehicle composition according to any one of claims 1 to 4 for the production of coating media which can be hardened at temperatures of 20 to 80°C.

9. The use of the coating media according to claim 5 for the production of multi-layer coatings.

10. The use of the coating media according to claim 5 for the production of motor vehicle coatings for mass production and repair.

## Revendications

1. Composition de liant contenant
A. 4 - 72% en poids d'un composé CH-acide, que l'on peut obtenir par transestérification d'un ester d'acide β-cétocarboxylique aliphatique, avec un ou plusieurs monomères et/ou polymères contenant des groupes hydroxyle, qui contiennent au moins deux groupes hydroxyle dans la molécule, avec un indice d'OH d'au moins 50, et une moyenne en nombre du poids moléculaire (Mn) allant jusqu'à 10 000,
B. 4 - 72% en poids d'un composé α,β-insaturé avec au moins deux groupes de formule générale
R₁R₂C=CR₃-CO-
qui est lié par l'intermédiaire du radical d'un alcool polyvalent, d'une di- ou polyamine ou d'un aminoalcool, à au moins un autre groupe R₁R₂C=CR₃-CO- où R₁, R₂ et R₃ représentent indépendamment l'un de l'autre un atome d'hydrogène ou un radical alkyle droit ou ramifié comportant de 1 à 10 atomes de carbone, qui peut présenter une ou plusieurs insaturations oléfiniques, et/ou un plusieurs groupes hydroxyle,
C. 10 - 80% en poids d'une ou plusieurs polyamines avec au moins deux fonctions amine primaires et/ou secondaires, qui peuvent être masquées, dans la molécule, comme durcissant, et
D. 0,01 - 5% en poids, par rapport à la somme des poids des composants A, B et C, d'un catalyseur sous forme d'une base de Lewis ou de Brönstedt, où les acides conjugués de ces dernières ont un pKA d'au moins 10.

2. Composition de liant selon la revendication 1, caractérisée en ce que le monomère contenant des groupes hydroxyle et en ce que le polymère contenant des groupes hydroxyle du composant A sont choisis parmi
a) les polyols du groupe des alcanedi- et -polyols droits ou ramifiés ayant de 2 à 12 atomes de carbone,
b) les poly(méth)acrylates ou poly(méth)acrylamides contenant des groupes hydroxyle à base d'hydroxyalkylester d'acide (méth)acrylique ou d'hydroxyalkylamine d'acide (méth)acrylique avec à chaque fois de 2 à 12 atomes de carbone dans la partie alkyle, éventuellement copolymérisés avec des monomères α,β-insaturés, avec une moyenne en nombre du poids moléculaire (Mn) de 1 000 à 10 000,
c) les groupes poly(méth)acrylate contenant des groupes hydroxyle à base d'hydroxyalkylester d'acides (méth)acryliques avec de 2 à 12 atomes de carbone dans la partie alkyle et, le cas échéant, des monomères α,β-insaturés copolymérisables, qui sont modifiés avec des esters cycliques d'acides hydroxycarboxyliques comportant de 4 à 6 atomes de carbone, avec une moyenne en nombre du poids moléculaire (Mn) de 1 000 à 10 000, et
d) des polyester-polyols ou des polyéther-polyols ayant à chaque fois une moyenne de poids moléculaire en nombre (Mn) de 500 à 2 000.

3. Composition de liant selon l'une quelconque des revendications 1 ou 2, caractérisée en ce qu'elle est présente sous forme dépourvue de solvant.

4. Composition de liant selon l'une des revendications 1 ou 2, caractérisée en ce qu'elle se présente sous une forme contenant des solvants.

5. Revêtement contenant la composition de liant selon l'une quelconque des revendications 1 à 4, et en outre un ou plusieurs solvants organiques et/ou de l'eau, ainsi que des pigments, et/ou des charges, et le cas échéant, des additifs habituels pour les laques.

6. Procédé de laquage en plusieurs couches par dépôt d'une couche de produit de garnissage sur un substrat à laquer, le cas échéant muni d'un apprêt, dépôt d'une couche de laque de base et, le cas échéant, d'une couche de laque claire, les couches étant cuites isolément et/ou ensemble, caractérisé en ce que pour préparer la couche de produit de garnissage, on utilise un revêtement selon la revendication 5.

7. Application de la composition de liant selon l'une des revendications 1 à 4 à la préparation de masses pour spatule ou de produits de garnissage.

8. Application de la composition de liant selon l'une des revendications 1 à 4 à la préparation de revêtements durcissables à des températures de 20 à 80°C.

9. Application des revêtements selon la revendication 5 à la préparation d'enduits de laque à plusieurs couches.

10. Application des revêtements selon la revendication 5 à la préparation d'enduits de laque en série pour automobiles, et d'enduits pour réparation des automobiles.
